# EUROPÄISCHE PATENTANMELDUNG

(11) **EP 2 905 730 A1**
(43) Veröffentlichungstag der Anmeldung: **12.08.2015**
(21) Anmeldenummer: 15151972.5
(22) Anmeldetag: 21.01.2015
(51) Int. Cl.: G06Q 10/08

(54) **Mehrfunktionale Kennzeichnung eines Produktes**

(30) Priorität: 10.02.2014 DE 102014101624
(71) Anmelder: Pfeiffer Vacuum GmbH, 35614 Aßlar (DE)
(72) Erfinder: Stammler, Herbert, 35396 Gießen (DE); Braunschweig, Falk, 97877 Wertheim (DE)
(74) Vertreter: Manitz, Finsterwald & Partner GbR

(57) **Zusammenfassung**

Bei einem Verfahren zur mehrfunktionalen Kennzeichnung eines Produktes, insbesondere eines Produktes der Vakuumtechnik wie z. B. einer Vakuumpumpe, eines Vakuummessgerätes oder eines Ventils, durch ein maschinenlesbares Identifikationsmerkmal, das eine ausschließlich dem Produkt zugeordnete Seriennummer enthält und gleichzeitig eine Internetadresse umfasst, wird das Identifikationsmerkmal einer internetfähigen Einrichtung zugeführt, um mittels der internetfähigen Einrichtung über die Internetadresse des Identifikationsmerkmals zusätzliche mit dem Produkt assoziierte Informationen abzurufen. Es wird ferner ein System zur mehrfunktionalen Kennzeichnung eines Produktes zur Durchführung des Verfahrens angegeben.

## Beschreibung

Die vorliegende Erfindung betrifft ein Verfahren sowie ein System zur mehrfunktionalen Kennzeichnung eines Produktes, insbesondere eines Produktes der Vakuumtechnik wie z. B. einer Vakuumpumpe, eines Vakuummessgerätes oder eines Ventils.

Bei den bisher üblichen Verfahren zur Kennzeichnung eines Produktes wird das jeweilige Produkt stets mit eindeutigen oder einfunktionalen Identifikationsmerkmalen versehen. Dabei handelt es sich typischerweise um eine Seriennummer, eine Artikel- und/oder eine Modellnummer. Üblicherweise wird die Seriennummer nur einmal für ein einzelnes Produkt vergeben, während die Artikel- bzw. Modellnummer wiederholt für eine typisch gleichartige oder annähernd gleichartige Menge von Produkten verwendet wird.

Zur schnelleren Lesbarkeit werden die Identifikationsmerkmale häufig maschinenlesbar am Produkt codiert, zum Beispiel als ein- oder zweidimensionaler Strich- und/oder Punktcode, mittels einer applizierten elektronisch auslesbaren Identifikation. Eine solche auslesbare Identifikation kann beispielsweise aktive oder passive Funkmodule wie insbesondere Radiofrequenzidentifikations-Tags (RFID-Tags) oder Nahfeldkommunikations-Tags (NFC-Tags) umfassen oder durch Einbettung in eine dem Produkt zugeordnete interne Steuerelektronik verwirklicht sein, die dann durch Anschluss eines Datenbus oder Datenfunks aktiv ausgelesen werden kann.

Dabei können die Identifikationsmerkmale verschiedenen Arten von Elementen zugeordnet sein, zum Beispiel gedruckt auf einem Etikett, gegebenenfalls zwischen Folien eines Etiketts laminiert, als mechanisches Element befestigt, eingepresst oder eingelegt in einer Ausnehmung des Produktes oder auch direkt aufgebracht mittels Sprühdruckverfahren, einer Laserbeschriftung oder aufgebracht mittels mechanischer Beschriftungstechniken wie Gravieren oder Nadelprägung. In allen der bisher bekannten Fälle liefern solche Identifikationsmerkmale typischerweise nur eine einzige Informationseinheit, also entweder die Seriennummer oder die Artikelnummer. Durch mehrfaches Auslesen, Ablesen oder Einlesen können diese Nummern auch zusammenhängend oder gemeinsam gesammelt werden. So ermöglichen beispielsweise sowohl Funklesegeräte als auch optische Erfassungsgeräte häufig einen Mehrfach-Einlesemodus, bei dem alle sich im Empfangs- oder Sichtbereich befindlichen Merkmale automatisch hintereinander erfasst werden ("Bulk-Scan").

Diese bisher üblichen Verfahren und Systeme beinhalten jedoch das Problem, dass entweder nur ein Merkmal erfasst werden kann oder die Zusammenführung mehrerer gelesener Merkmale die Unsicherheit erhöht, dass auch Merkmale von angrenzend gelagerten oder verbauten Produkten versehentlich mit erfasst werden.

Der Erfindung liegt die Aufgabe zugrunde, ein verbessertes Verfahren sowie ein verbessertes System zur Kennzeichnung eines Produktes, insbesondere eines Produktes der Vakuumtechnik wie z.B. einer Vakuumpumpe, eines Vakuummessgerätes oder eines Ventils, anzugeben, mit denen das zuvor genannte Problem beseitigt wird. Dabei soll unter Gewährleistung einer höheren Auslesesicherheit insbesondere auch eine mehrfunktionale Kennzeichnung eines jeweiligen Produktes ermöglicht werden.

Diese Aufgabe wird erfindungsgemäß durch ein Verfahren mit den Merkmalen des Anspruchs 1 sowie ein System mit den Merkmalen des Anspruchs 14 gelöst. Bevorzugte Ausgestaltungen des erfindungsgemäßen Verfahrens sowie bevorzugte Ausführungsformen des erfindungsgemäßen Systems sind in den Unteransprüchen angegeben.

Besonders vorteilhaft ist die erfindungsgemäße mehrfunktionale Kennzeichnung auf dem Gebiet der Vakuumtechnik, insbesondere in Verbindung mit der Kennzeichnung von Geräten der Vakuumtechnik wie beispielsweise Vakuumpumpen, Vakuum- bzw. Druckmessgeräten und Ventilen sowie weiteren Komponenten wie beispielsweise Analysegeräten, Lecksuchgeräten, Durchführungen und Manipulatoren.

Das erfindungsgemäße Verfahren dient der mehrfunktionalen Kennzeichnung eines Produktes durch ein maschinenlesbares Identifikationsmerkmal, das eine ausschließlich dem Produkt zugeordnete Seriennummer sowie gleichzeitig eine Internetadresse umfasst, wobei das Identifikationsmerkmal einer internetfähigen Einrichtung zugeführt wird und mittels der internetfähigen Einrichtung über die Internetadresse des Identifikationsmerkmals zusätzliche mit dem Produkt assoziierte Informationen abgerufen werden. Die Seriennummer kann unmittelbar vom Empfänger oder mittels eines Lesegeräts ohne Internetzugriff ausgelesen werden. Das Lesegerät kann getrennt von der internetfähigen Einrichtung vorgesehen oder in dieser integriert sein.

Das Identifikationsmerkmal erfüllt somit eine Mehrfachfunktion. Dabei kann im einfachsten Fall nicht nur eine Seriennummer dargestellt bzw. codiert wiedergegeben werden, die Seriennummer kann gleichzeitig auch eine Internetadresse (URL) darstellen, die zum einen einen allgemeinen Adressenbestandteil und zum anderen die eindeutige Identifikation bzw. Seriennummer enthalten kann. Die Internetadresse bietet unter anderem den Vorteil, dass der auslesende Informationsempfänger diese Internetadresse direkt aufrufen und mit dem Produkt assoziierte Informationen mittels eines internetfähigen Geräts abrufen bzw. wiedergeben kann.

Die zusätzlichen mit dem Produkt assoziierten Informationen können insbesondere von einem Web-Server und/oder von einer heruntergeladenen, insbesondere lokalen Anwendungssoftware abgerufen werden. Hierbei ist der Web-Server bzw. die Anwendungssoftware insbesondere über die in dem Identifikationsmerkmal enthaltene Internetadresse zugänglich.

Die über die internetfähige Einrichtung abgerufenen zusätzlichen mit dem Produkt assoziierten Informationen können über eine beispielsweise der internetfähigen Einrichtung zugeordnete Wiedergabeeinheit wiedergegeben werden. Eine solche Wiedergabeeinheit kann jedoch auch getrennt von der internetfähigen Einrichtung vorgesehen sein.

Gemäß einer bevorzugten praktischen Ausgestaltung des erfindungsgemäßen Verfahrens umfassen die über die internetfähige Einrichtung abrufbaren zusätzlichen mit dem Produkt assoziierten Informationen eine das Produkt betreffende Artikel- und/oder Modellnummer.

Hierbei können insbesondere der Hersteller des Produktes und der Anbieter des Internet-Informationsdienstes die Seriennummer einer Produktgruppe zuordnen, um entsprechende Produktdaten zur Verfügung zu stellen.

Gemäß einer alternativen vorteilhaften Ausgestaltung des erfindungsgemäßen Verfahrens kann jedoch auch bereits das maschinenlesbare Identifikationsmerkmal eine das Produkt betreffende Artikel- und/oder Modellnummer umfassen. Indem nicht nur eine Seriennummer, sondern gleichzeitig auch eine Artikel- und/oder Modellnummer in das maschinenlesbare Identifikationsmerkmal bzw. die Internetadresse integriert ist, kann neben der Seriennummer auch die Artikel- und/oder Modellnummer unmittelbar vom Empfänger oder über das lokale Lesegerät ohne Internetzugriff ausgelesen werden. Für den auslesenden Informationsempfänger ergibt sich damit überdies der Vorteil, dass die Fusion und/oder Zuordnung dieser Daten nicht mehr durch den Hersteller erfolgen muss, sondern lokal ohne Netzwerkverbindung bzw. Internetzugriff direkt ermöglicht wird.

Die in dem maschinenlesbaren Identifikationsmerkmal enthaltenen Informationen werden zweckmäßigerweise mittels spezifischer Filterfunktionen aus dem Identifikationsmerkmal extrahiert.

Eine solche Auslesung von Informationen kann insbesondere durch spezifische Software oder Geräte des Produktherstellers erfolgen, die die betreffenden spezifischen Filterfunktionen enthalten, um nur die gewünschte relevante bzw. die gewünschten relevanten Informationen aus dem Identifikationsmerkmal bzw. der Internetadresse zu extrahieren.

Gemäß einer weiteren zweckmäßigen Ausgestaltung des erfindungsgemäßen Verfahrens können die in dem maschinenlesbaren Identifikationsmerkmal enthaltenen Informationen und/oder die über die Internetadresse abgerufenen zusätzlichen Informationen netzwerkgestützt weiterverarbeitet werden.

Damit wird unter anderem auch ein zusätzlicher Mehrwert durch lokale oder zusätzlich netzwerkgestützte Weiterverarbeitungen der ausgelesenen Informationen ermöglicht.

So kann beispielsweise eine Betriebssoftware oder eine mobile Softwareanwendung (App) aus den vorhandenen Daten auf interne Spezifikationen zurückgreifen, um eine schnelle Integration des identifizierten Gerätes in eine vorhandene Geräte-Bus-Topologie zu ermöglichen bzw. um eine direkte oder indirekte Verbindung mit dem identifizierten Gerät über eine vorhandene Datenschnittstelle aufzunehmen und dadurch beispielsweise Betriebsdaten auszutauschen bzw. eine Inbetriebnahme vorzunehmen.

Es ist beispielsweise auch eine Integration in ein vorhandenes Schaltbild oder eine Produkt- oder Portfolioliste denkbar, mit der in der Anwendungssoftware weitergehende Verarbeitungsschritte ermöglicht werden. Dabei können beispielsweise Zusatzinformationen, aktuelle Hinweise zu Softwareupdates oder zusätzliche Produktinformationen bereitgestellt werden.

Die mittels der internetfähigen Einrichtung über die Internetadresse abrufbaren zusätzlichen mit dem Produkt assoziierten Informationen können also unter anderem aktuelle Hinweise zu Softwareupdates und/oder zusätzliche Produktinformationen umfassen.

Gemäß einer weiteren vorteilhaften Ausgestaltung des erfindungsgemäßen Verfahrens werden über die in dem Identifikationsmerkmal enthaltene Internetadresse jeweils aktuelle mit dem Produkt assoziierte Informationen abgerufen und daraus der Lebenslauf des Produktes nachverfolgt.

Ein Vorteil der netzwerkgestützten Anwendung besteht somit auch darin, dass aktualisierte bzw. tagesaktuelle Informationen zum Produkt zur Verfügung gestellt werden können. Für den Hersteller des Produktes ergibt sich zudem der Vorteil, dass ihm die Nachverfolgung des Produktes ermöglicht wird. Sobald eine Internetadresse vom Web-Server des Herstellers aufgerufen wird, kann der Hersteller die Daten des Aufrufs auch zur Vervollständigung eines jeweiligen Produktlebenslaufs heranziehen. Hierbei kann beispielsweise zu der erkannten Seriennummer eine Sichtung bzw. Erfassung des Produktes mit entsprechendem Datum und gegebenenfalls weiteren Daten des abrufenden Nutzers abgelegt werden. Weitere Daten können z.B. eine globale Netzwerkadresse (IP), eine Georeferenzierung der Netzwerkadresse, Eigenschaften der die Daten abrufenden Softwareanwendung und, falls vorhanden, eine Benutzerkennung umfassen. Benutzerkennungen können insbesondere stets dann anfallen, wenn der Nutzer in einem verbundenen Netzwerkangebot oder der Softwareanwendung sich aktiv anmeldet oder aus anderen Gründen angemeldet ist bzw. die Softwareanwendung personalisiert erstellt wurde oder anderweitige personengebundene Merkmale wie zum Beispiel Lizenzschlüssel enthält.

Indem beim Aufrufen der Internetadresse über eine Anwendersoftware oder auf einer Internetseite ein Produktlebenslauf zur Verfügung gestellt bzw. angeboten wird, ergibt sich für den Nutzer ein zusätzlicher Mehrwert.

Gemäß einer weiteren vorteilhaften Ausgestaltung des erfindungsgemäßen Verfahrens umfasst das Identifikationsmerkmal durch ein Trennzeichen oder eine Kennung von den restlichen Informationen wie insbesondere der Seriennummer und der Artikel- und/oder Modellnummer abgegrenzte weitere Informationen, wobei diese weiteren Informationen mittels spezifischer Filterfunktionen aus dem Identifikationsmerkmal extrahiert werden.

Mit dem Anhängen von Zusatzdaten über ein entsprechendes Trennzeichen ergibt sich somit eine zusätzliche Möglichkeit, weitere Informationen in die vorhandene Internetadresse einzubinden. Damit können zum Beispiel technische Daten wie beispielsweise die Nenndrehzahl oder die Artikel- und/oder Modellnummer eines bei einer jeweiligen Wartung benötigten Ersatzteils wie zum Beispiel eines Schmierungs-Revisionszusatzes oder dergleichen zusätzlich so codiert werden, dass sie eindeutig per Kennung aus der Internetadresse herausgefiltert werden können und die anderen vorhandenen Daten nicht gestört werden.

Mit einer solchen Lösung ist eine Aufwärtskompatibilität der Internetadresse gewährleistet, so dass auch zukünftige Internetadressen noch von Lesegeräten älterer Art ausgelesen und richtig gefiltert werden können, da nicht allein die Position, sondern auch die Kennung bzw. die Art der Trennung der Informationen eine Abgrenzung zwischen stets vorhandenen und nur manchmal vorhandenen Daten ermöglicht.

Es kann beispielsweise ein auf dem Produkt aufgebrachtes Typenschild, ein einer Verpackung des Produktes zugeordnetes Etikett, eine das Produkt enthaltende Versandpackung, ein Lieferschein, eine Rechnung und/oder dergleichen mit dem Identifikationsmerkmal versehen werden.

Alternativ oder zusätzlich kann das Identifikationsmerkmal zumindest teilweise auch in einer Werbeschrift, einem Katalog und/oder in einem anderen Medium enthalten sein.

Mit der Einbringung des Identifikationsmerkmals in eine Werbeschrift, einen Katalog und/oder dergleichen, typischerweise ohne Einbindung der Seriennummer, werden Medienbrüche vermieden, die sich ansonsten vor allem durch manuelles Ablesen, Abschreiben oder Übertragen ergeben können.

Zudem kann ein Produkt, das über eine eigene Mensch-Maschine-Schnittstelle wie beispielsweise eine Status-Anzeige, zum Beispiel eine monochrome oder farbige LCD-, TFT- und/oder LED-Anzeige verfügt, ein Kennzeichnungsmerkmal über eine solche Mensch-Maschine-Schnittstelle wiedergeben, so dass dieses gegebenenfalls auch dynamisch mit zusätzlichen Informationen wie beispielsweise dem aktuellen Betriebszustand, den Betriebsstunden, der Zeit bis zur nächsten Wartung etc. angereichert werden kann, um beim Auslesen der Merkmale dem Anwender direkt eine dynamische Auswahl bzw. Vorschläge für mögliche Vorgänge anzubieten. So kann zum Beispiel mittels des auslesenden Programms bzw. des darstellenden Web-Servers auf einen anstehenden Wartungstermin hingewiesen und/oder ein Terminangebot unterbreitet werden.

Gemäß einer weiteren bevorzugten Ausführungsgestaltung des erfindungsgemäßen Verfahrens wird das Identifikationsmerkmal in codierter und/oder komprimierter Form vorgesehen und über einen Netzwerkzugriff, eine Anwendungssoftware und/oder ein lokales Programm decodiert bzw. dekomprimiert.

Dem gegebenenfalls auftretenden Problem, dass das Identifikationsmerkmal je nach der Menge der einzubettenden Daten für den gedachten Anwendungszweck zu groß wird, kann somit durch eine besondere Codierung bzw. Komprimierung des Inhalts dieses Identifikationsmerkmals begegnet werden.

So kann die Internetadresse beispielsweise über einen Zwischenschritt, gegebenenfalls durch einen entsprechenden Dienstleister verkürzt werden, so dass der eigentliche Inhalt erst bei einem Abruf durch den entschlüsselnden Server zur Verfügung gestellt wird. So könnte beispielsweise eine Internetadresse "http://id.pfeiffer-vacuum.com/PMP03933/12345678" z.B. durch den Dienstleister zu "http://goo.gl/A1BC3" abgekürzt werden, wobei die gekürzte Internetadresse als Identifikationsmerkmal dient, jedoch durch den aktiven Netzwerkzugriff per Antwort vom entschlüsselnden Server zurück zur eigentlichen langen Internetadresse decodiert werden kann.

Eine solche Verkürzung kann nicht nur für den Zugriff auf die Internetseite zum Abruf von Produktinformationen genutzt werden, es kann auch eine Softwareanwendung oder ein lokales Programm die Rückmeldung der entschlüsselten Information direkt verarbeiten und, wie bereits beschrieben, Bestandteile lokal weiter verwenden, ohne die entsprechende Internetseite darzustellen.

Um den bei einer aktiven Serverlösung erforderlichen Netzwerkzugriff zu vermeiden, kann beispielsweise durch eine allgemein gültige, insbesondere lokal in einer Softwarenanwendung verfügbare Codierungstabelle eine logische Verkürzung der Information vorgenommen werden, die damit lokal ohne Netzwerkzugriff durch eine Softwareanwendung auf die eigentliche Information rückführbar ist, jedoch weniger Platz bzw. Zeichen erfordert. Alternativ oder zusätzlich kann die entsprechende Codierungstabelle insbesondere auch auf dem Web-Server des Herstellers vorgehalten werden, so dass auch ein Aufruf des Identifikationsmerkmals mit einem beliebigen internetfähigen Gerät nach wie vor möglich ist und zum gewünschten Informationsangebot führt.

So könnte beispielsweise eine Internetadresse "http://id.pfeiffer-vacuum.com/PMP03933/12345678" z.B. zu "http://pfva.com/TaCv/Q3vE" abgekürzt werden, wobei einerseits eine möglichst kurze Domain gewählt wird und andererseits überflüssige Informationen abgekürzt bzw. durch Platzhalter ersetzt werden sowie eine numerische Information beispielsweise durch eine alphanumerische Codierung in der Zeichenzahl verkürzt wird.

Optional kann neben einem solchen verkürzten Identifikationsmerkmal dennoch die ursprüngliche lange Internetadresse als lesbarer Text dargestellt werden, so dass gegebenenfalls ein Anwender die Möglichkeit besitzt, die Merkmale ohne Kenntnis der genutzten Codierung zu ermitteln.

Eine entsprechende Codierungstabelle bzw. eine allgemeine Spezifikation der entsprechend verwendeten Strukturierung der Internetadresse und gegebenenfalls Codierung kann auch dem Anwender bzw. dem Kunden zur Verfügung gestellt werden, so dass diese die Möglichkeit besitzen, alle Merkmale automatisch gefiltert in eigene Datenverarbeitungssysteme einzulesen und strukturiert weiter zu verarbeiten.

Das erfindungsgemäße System zur mehrfunktionalen Kennzeichnung eines Produktes durch ein maschinenlesbares Identifikationsmerkmal, das sowohl eine ausschließlich dem Produkt zugeordnete Seriennummer als auch eine Internetadresse umfasst, umfasst entsprechend Mittel zum Extrahieren der Internetadresse aus dem Identifikationsmerkmal, eine internetfähige Einrichtung zum Abruf von zusätzlichen mit dem Produkt assoziierten Informationen über die extrahierte Internetadresse sowie Mittel zur Weiterverarbeitung und/oder Wiedergabe der in dem Identifikationsmerkmal enthaltenen Information und/oder der über die Internetadresse abgerufenen zusätzlichen mit dem Produkt assoziierten Informationen. Zudem kann sie ein Lesegerät umfassen, über das insbesondere die in dem Identifikationsmerkmal enthaltene Seriennummer ohne Internetzugriff direkt auslesbar ist. Grundsätzlich können diese Seriennummer und gegebenenfalls weitere in dem Identifikationsmerkmal enthaltene Informationen auch ohne Lesegerät direkt vom Empfänger abgelesen werden.

Gemäß einer bevorzugten Ausführungsform des erfindungsgemäßen Systems sind die zusätzlichen mit dem Produkt assoziierten Informationen von einem Web-Server und/oder von einer heruntergeladenen Anwendungssoftware abrufbar.

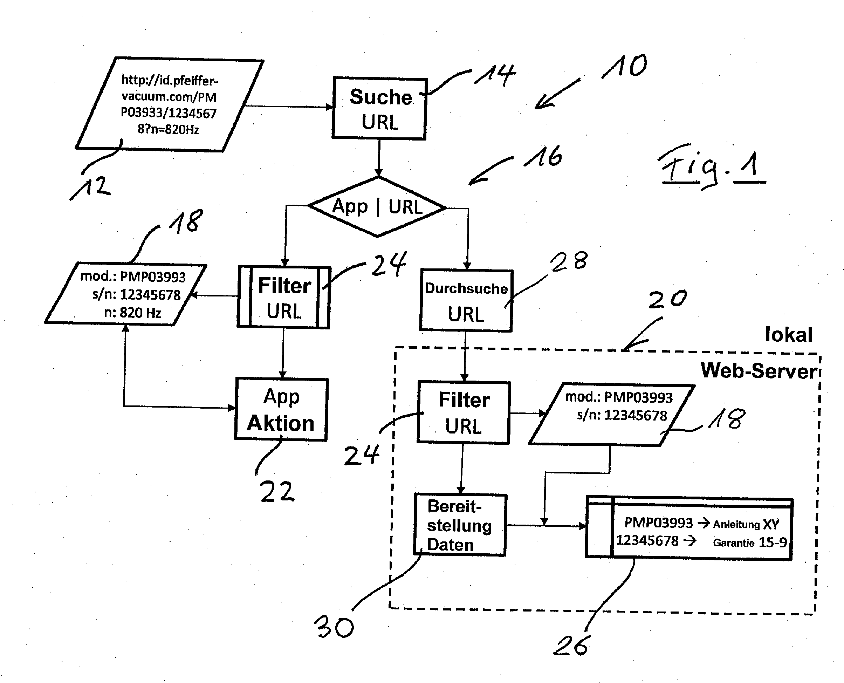

Die Erfindung wird im Folgenden anhand eines Ausführungsbeispiels unter Bezugnahme auf die Zeichnung näher erläutert.

Die einzige Figur der Zeichnung zeigt ein rein schematisches Funktionsablaufdiagramm einer beispielhaften Ausgestaltung des erfindungsgemäßen Verfahrens bzw. einer entsprechenden beispielhaften Ausführungsform des erfindungsgemäßen Systems.

Danach umfasst ein System 10 zur mehrfunktionalen Kennzeichnung eines Produktes durch ein maschinenlesbares Identifikationsmerkmal 12, das sowohl eine ausschließlich dem Produkt zugeordnete Seriennummer als auch eine Internetadresse (URL) umfasst, Mittel 14 zum Extrahieren der Internetadresse (URL) aus dem Identifikationsmerkmal 12, eine internetfähige Einrichtung zum Abruf von zusätzlichen mit dem Produkt assoziierten Informationen über die extrahierte Internetadresse (URL) sowie Mittel zur Weiterverarbeitung und/oder Wiedergabe der in dem Identifikationsmerkmal 12 enthaltenen Information und/oder der über die Internetadresse (URL) abgerufenen zusätzlichen mit dem Produkt assoziierten Informationen.

Die zusätzlichen mit dem Produkt assoziierten Informationen sind beispielsweise von einem Web-Server 20 und/oder von einer heruntergeladenen lokalen Anwendungssoftware 22, auch als "App" bezeichnet, abrufbar. Hierzu sind Entscheidungsmittel 16 vorgesehen, mittels welcher über eine Weiterverarbeitung entweder durch die "App" oder über die URL entschieden wird. Der Web-Server 20 umfasst einen Datenspeicher 18 mit extrahierten Daten sowie einen zentralen Datenspeicher 26 mit tabellarischen Zuordnungsdaten. Ferner sind Filterfunktionen 24 und eine Datenbereitstellung 30 vorgesehen.

Gemäß der Erfindung wird das Identifikationsmerkmal 12 einer internetfähigen Einrichtung zugeführt. Mittels der internetfähigen Einrichtung werden über die Internetadresse (URL) des Identifikationsmerkmals 12 zusätzliche mit dem Produkt assoziierte Informationen abgerufen. Diese Informationen können insbesondere von dem Web-Server 20 mittels eines Internet-Browsers 28 und/oder von der heruntergeladenen Anwendungssoftware 22 abgerufen werden.

Die abgerufenen Informationen können über eine Wiedergabeeinheit wiedergegeben werden, die getrennt von der internetfähigen Einrichtung vorgesehen oder auch in diese integriert sein kann.

Die über die internetfähige Einrichtung abrufbaren zusätzlichen mit dem Produkt assoziierten Informationen können insbesondere eine das Produkt betreffende Artikel- und/oder Modellnummer umfassen. Diese Informationen können jedoch auch andere oder weitere Informationen enthalten.

Die das Produkt betreffende Artikel- und/oder Modellnummer kann auch bereits in dem maschinenlesbaren Identifikationsmerkmal 12 enthalten sein, so dass auch diese Artikel- bzw. Modellnummer ohne Internetzugriff lokal z.B. mittels eines Lesegeräts oder unmittelbar durch den Empfänger ausgelesen werden kann.

Die in dem maschinenlesbaren Identifikationsmerkmal 12 enthaltenen Informationen können mittels spezifischer Filterfunktionen 24 aus dem Identifikationsmerkmal 12 extrahiert werden. Diese Filterfunktionen können insbesondere in dem betreffenden Lesegerät integriert sein.

Die in dem maschinenlesbaren Identifikationsmerkmal 12 enthaltenen Informationen und/oder die über die Internetadresse (URL) abgerufenen zusätzlichen Informationen können beispielsweise netzwerkgestützt weiterverarbeitet werden.

Die mittels der internetfähigen Einrichtung über die Internetadresse (URL) abrufbaren zusätzlichen mit dem Produkt assoziierten Informationen können beispielsweise aktuelle Hinweise zu Softwareupdates und/oder zusätzliche Produktinformationen umfassen.

Über die in dem Identifikationsmerkmal 12 enthaltene Internetadresse können insbesondere auch jeweils aktuelle mit dem Produkt assoziierte Informationen abgerufen werden, um daraus den Lebenslauf des Produktes nachzuverfolgen.

Das Identifikationsmerkmal 12 kann auch durch ein Trennzeichen oder eine Kennung von den restlichen Informationen wie insbesondere der Seriennummer und der Artikel- und/oder Modellnummer abgegrenzte weitere Informationen umfassen, wobei diese weiteren Informationen insbesondere wieder mittels spezifischer Filterfunktionen aus dem Identifikationsmerkmal 12 extrahiert werden können.

Es kann beispielsweise ein auf dem Produkt aufgebrachtes Typenschild, ein einer Verpackung des Produktes zugeordnetes Etikett, eine das Produkt enthaltende Versandpackung, ein Lieferschein, eine Rechnung und/oder dergleichen mit dem Identifikationsmerkmal 12 versehen werden.

Das Identifikationsmerkmal 12 kann zumindest teilweise auch in einer Werbeschrift, einem Katalog und/oder in einem anderen derartigen Medium enthalten sein, wobei in diesem Fall die Seriennummer typischerweise nicht mit eingebunden wird.

Das Identifikationsmerkmal 12 kann in codierter und/oder komprimierter Form vorgesehen und über einen Netzwerkzugriff, eine Anwendungssoftware und/oder ein lokales Programm decodiert bzw. dekomprimiert werden.

### Bezugszeichenliste

- 10: System
- 12: Identifikationsmerkmal
- 14: Extraktionsmittel
- 16: Entscheidungsmittel
- 18: Speichermittel
- 20: Web-Server
- 22: lokale Anwendungssoftware
- 24: Filterfunktionen
- 26: zentrales Speichermittel
- 28: Internet-Browser
- 30: Datenbereitstellung

## Patentansprüche

1. Verfahren zur mehrfunktionalen Kennzeichnung eines Produktes, insbesondere eines Produktes der Vakuumtechnik wie z. B. einer Vakuumpumpe, eines Vakuummessgerätes oder eines Ventils, durch ein maschinenlesbares Identifikationsmerkmal (12), bei dem das eine ausschließlich dem Produkt zugeordnete Seriennummer enthaltende Identifikationsmerkmal (12) gleichzeitig eine Internetadresse umfasst, das Identifikationsmerkmal (12) einer internetfähigen Einrichtung zugeführt wird und mittels der internetfähigen Einrichtung über die Internetadresse des Identifikationsmerkmals (12) zusätzliche mit dem Produkt assoziierte Informationen abgerufen werden.

2. Verfahren nach Anspruch 1,
**dadurch gekennzeichnet, dass** die zusätzlichen mit dem Produkt assoziierten Informationen von einem Web-Server (20) und/oder von einer heruntergeladenen, insbesondere lokalen Anwendungssoftware (22) abgerufen werden.

3. Verfahren nach Anspruch 1 oder 2,
**dadurch gekennzeichnet, dass** die über die internetfähige Einrichtung abgerufenen zusätzlichen mit dem Produkt assoziierten Informationen über eine insbesondere der internetfähigen Einrichtung zugeordnete Wiedergabeeinheit wiedergegeben werden.

4. Verfahren nach zumindest einem der vorstehenden Ansprüche,
**dadurch gekennzeichnet, dass** die über die internetfähige Einrichtung abrufbaren zusätzlichen mit dem Produkt assoziierten Informationen eine das Produkt betreffende Artikel- und/oder Modellnummer umfassen.

5. Verfahren nach zumindest einem der vorstehenden Ansprüche,
**dadurch gekennzeichnet, dass** das maschinenlesbare Identifikationsmerkmal (12) eine das Produkt betreffende Artikel- und/oder Modellnummer umfasst.

6. Verfahren nach zumindest einem der vorstehenden Ansprüche,
**dadurch gekennzeichnet, dass** die in dem maschinenlesbaren Identifikationsmerkmal (12) enthaltenen Informationen mittels spezifischer Filterfunktionen (24) aus dem Identifikationsmerkmal (12) extrahiert werden.

7. Verfahren nach zumindest einem der vorstehenden Ansprüche,
**dadurch gekennzeichnet, dass** die in dem maschinenlesbaren Identifikationsmerkmal (12) enthaltenen Informationen und/oder die über die Internetadresse abgerufenen zusätzlichen Informationen netzwerkgestützt weiterverarbeitet werden.

8. Verfahren nach zumindest einem der vorstehenden Ansprüche,
**dadurch gekennzeichnet, dass** die mittels der internetfähigen Einrichtung über die Internetadresse abrufbaren zusätzlichen mit dem Produkt assoziierten Informationen aktuelle Hinweise zu Softwareupdates und/oder zusätzliche Produktinformationen umfassen.

9. Verfahren nach zumindest einem der vorstehenden Ansprüche,
**dadurch gekennzeichnet, dass** über die in dem Identifikationsmerkmal (12) enthaltene Internetadresse jeweils aktuelle mit dem Produkt assoziierte Informationen abgerufen werden und daraus der Lebenslauf des Produktes nachverfolgt wird.

10. Verfahren nach zumindest einem der vorstehenden Ansprüche,
**dadurch gekennzeichnet, dass** das Identifikationsmerkmal (12) durch ein Trennzeichen oder eine Kennung von den restlichen Informationen wie insbesondere der Seriennummer und der Artikel- und/oder Modellnummer abgegrenzte weitere Informationen umfasst und diese weiteren Informationen mittels spezifischer Filterfunktionen aus dem Identifikationsmerkmal (12) extrahiert werden.

11. Verfahren nach zumindest einem der vorstehenden Ansprüche,
**dadurch gekennzeichnet, dass** ein auf dem Produkt aufgebachtes Typenschild, ein einer Verpackung des Produktes zugeordnetes Etikett, eine das Produkt enthaltende Versandverpackung, ein Lieferschein, eine Rechnung und/oder dergleichen mit dem Identifikationsmerkmal (12) versehen wird.

12. Verfahren nach Anspruch 11,
**dadurch gekennzeichnet, dass** das Identifikationsmerkmal (12) zumindest teilweise auch in einer Werbeschrift, einem Katalog und/oder in einem anderen Medium enthalten ist.

13. Verfahren nach zumindest einem der vorstehenden Ansprüche,
**dadurch gekennzeichnet, dass** das Identifikationsmerkmal (12) in codierter und/oder komprimierter Form vorgesehen und über einen Netzwerkzugriff, eine Anwendungssoftware und/oder ein lokales Programm decodiert bzw. dekomprimiert wird.

14. System (10) zur mehrfunktionalen Kennzeichnung eines Produktes, insbesondere eines Produktes der Vakuumtechnik wie z. B. einer Vakuumpumpe, eines Vakuummessgerätes oder eines Ventils, durch ein maschinenlesbares Identifikationsmerkmal (12), das sowohl eine ausschließlich dem Produkt zugeordnete Seriennummer als auch eine Internetadresse umfasst, insbesondere zur Durchführung des Verfahrens nach zumindest einem der vorstehenden Ansprüche, mit Mittel (14) zum Extrahieren der Internetadresse aus dem Identifikationsmerkmal (12), einer internetfähigen Einrichtung zum Abruf von zusätzlichen mit dem Produkt assoziierten Informationen über die extrahierte Internetadresse sowie mit Mitteln zur Weiterverarbeitung und/oder Wiedergabe der in dem Identifikationsmerkmal enthaltenen Information und/oder der über die Internetadresse abgerufenen zusätzlichen mit dem Produkt assoziierten Informationen.

15. System nach Anspruch 14,
**dadurch gekennzeichnet, dass** die zusätzlichen mit dem Produkt assoziierten Informationen von einem Web-Server (20) und/oder von einer heruntergeladenen, insbesondere lokalen Anwendungssoftware (22) abrufbar sind.
